# EUROPEAN PATENT SPECIFICATION

(11) **EP 0 563 188 B1**
(45) Date of publication and mention of the grant of the patent: **27.09.1995**
(21) Application number: 92901792.9
(22) Date of filing: 20.12.1991
(51) Int. Cl.: A23J 3/00

(54) **Method for the production of dried collagen**
Verfahren zur Herstellung von getrocknetem Kollagen
Procédé de production de collagène sec

(30) Priority: 20.12.1990 GB 9027694
(43) Date of publication of application: 06.10.1993
(73) Proprietor: STORK FIBRON B.V., 5349 AE Oss (NL)
(72) Inventor: FRENCH, James, William, Leonard Venta Silurum, Dorchester Dorset DT2 7SX (GB); VINCENT, Maurice, William Gable Cottage Stanmore, Berkshire RG16 8SL (GB)
(74) Representative: BROOKES & MARTIN
(86) International application number: GB9102289
(87) International publication number: WO9210944

(56) References cited:
- WO-A-89/11799
- WO-A-90/10393

## Description

This invention relates to the production of dried collagen from animal products and its utilization in reconstitution of meat.

In PCT patent application PCT/GB90/00344 (WO90/10393) there is described a method of reconstituting meat by incorporation of added dried collagen fibres. It was found that fibrous collagen was superior to particles of collagen in inducing development of enhanced texture in mechanically recovered meat.

One problem encountered in the production of textured meat in accordance with our above application is that dried collagen often contains a large proportion of particulate, non-fibrous material or material in which the fibrous character is not fully developed. Another problem is that collagen tends to be hydrolysed to gelatin or degraded if drying conditions are too severe.

It is therefore one object of this invention to provide an improved method of obtaining fibrous collagen.

The present invention is based on the discovery that collagen having a highly developed fibrous character is obtained by contacting pieces of collagen-containing material with a stream of heated gas under varying drying conditions in which the drying rate is controlled to a maximum gas temperature of about 60°C initially, until the water content has reduced to about half of its original content, e.g. 30% to 35% by weight or less, and the drying conditions are then changed by increasing the gas temperature and drying continued until the desired final moisture content is reached.

According to one aspect of the present invention there is provided a method of producing dried fibrous collagen which comprises subjecting pieces of material containing collagen, the pH of which being in the region of neutrality, to drying under variable drying conditions, wherein, initially, said material is subjected to drying in a first stream of heated gas maintained at a temperature of less than 60°C and subsequently further drying the resulting partially dried material in a second heated gas stream at a temperature which is higher than said first stream, and cooling the material, after exposure to said second heated gas, the temperatures and treatment times during said drying being controlled to minimise discolouration and hydrolysis of the dried material and milling the dried collagen to form fibrous collagen.

The maximum permissible temperature of the heated gas during the initial drying depends on the water content of the collagen-rich feedstock. In the case where the water content is relatively low, e.g. in the case of tendons, the initial temperature may be close to 60°C. However, the preferred feedstock is split hides, which have a high water content, usually in the range of 70 to 80%. When employing feedstock having a water content of this order, the initial gas temperature should be below 55°c and preferably below 50°C.

There are, essentially, two undesired reactions which are to be avoided in the drying process of this invention. the first is hydrolysis and the second is oxidation. Hydrolysis causes the conversion of collagen within the feedstock to gelatin. Hydrolysis of collagen will proceed more rapidly at higher temperatures.

The rate of reaction also depends on the water-content of the collagen material; proceeding faster at higher water contents. Further, the rate of reaction is sensitive to the pH value of the water associated with the collagen, being slowest at neutral or near neutral pH values.

Although, theoretically, the best drying conditions to avoid hydrolysis would be at normal room temperature or below, the drying rate is too slow for practical purposes.

The other undesired reaction, namely oxidation, which results in hardening and discolouration of the product also proceeds faster at higher temperatures.

We have found surprisingly that dry collagen fibre can be produced at an acceptable production rate by controlling the pH to the region of neutrality and subjecting the material to forced drying in a gas stream whose temperature is limited initially to less than 60°C. Once the water content has been reduced to 30 to 35%, the partially dried product can be exposed to a higher temperature gas stream than in the initial phase.

When using a feedstock comprising split hides, the above reduction in water content can be reached within 6 to 10 minutes, when operating at a gas stream temperature of 45 to 48°C. The lower the temperature, the longer the residence time required and typically the residence time will be between 4 and 10 minutes in the initial phase.

Currently, the preferred drying equipment comprises a fluidised bed formed by blowing the heated gas stream through a bed of separated pieces of the collagen-rich material. One fluidised bed drier or one or more zones of the fluidised bed drier may constitute the initial drying phase. The second or subsequent drying phases may be carried out in another zone or zones of the same drier or in another fluidised bed drier or driers.

Although for economy the heated gas is preferably air, other drying gases may be used, e.g. nitrogen. the air or other gas may be subjected to a special pre-drying stage in order to increase its take up of moisture in the drier.

Preferably, the initial heating stage should be carried out using a fluidising gas (normally air) heated to a temperature in the range of 35 to 50°C. The aim is to reduce the moisture content to about one half of the original content, i.e. a level of 20 to 45%, typically 25 to 30%. The drying rate for a particular fluidised bed will depend on a number of factors, including the initial water content of the collagen-containing material, the air temperature, the air flow and the state of sub-division of the material to be dried.

Preferably, the material to be dried is separated into pieces which will pass a sieve 4 to 8 mm openings. In the case of hide splits, which is the preferred starting material and is rich in collagen, the raw material is treated to neutralise and remove the alkali, such as sodium sulphide and lime which are conventionally used in tanneries to remove hair and residual fat. This may be done by washing the split hides (before or after cutting into pieces) in dilute acid. e.g. 0.1 to 0.3% HCl, and then washed one or more times with water until a pH of about 6 to 7, e.g. 6.5 is achieved. The separated pieces of split hide, which typically have dimensions of 5 to 10 mms by 3 to 5 mms are conveyed in a stream of water from the final wash stage to the initial stage of the drying process. The hide splits are typically 2 to 8 mms thick. In this condition, the wet pieces of hide can be readily pumped. The hide pieces are separated from the water stream by passing the stream over a screen and then feeding the recovered hide pieces to the first stage of the drying process.

The drying equipment preferably employed in the method of this invention is described in detail in copending European Patent Application No. 91309612.9 (EPA 0481799) in the name of Stork Protecon B.V.

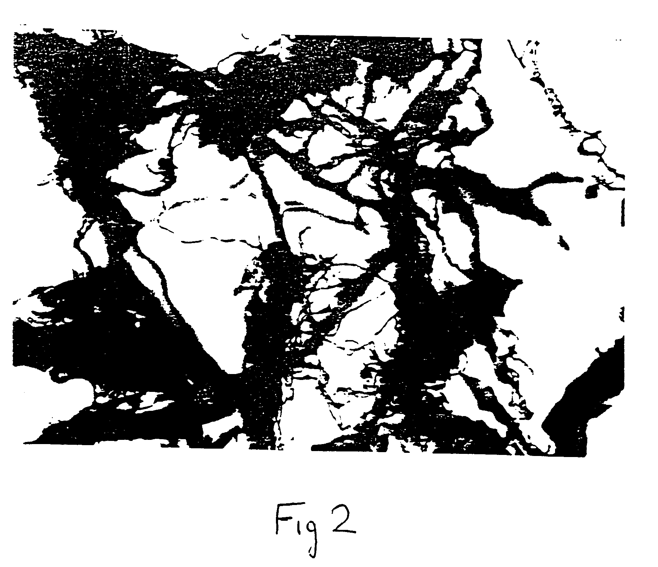

Referring to the accompanying drawing which is Figure 2 of the above copending European patent application, the pieces of wet hide splits are fed to the first chamber or zone A of the drier. As described in European patent application No. 91309612.9, (EPA 0481799), the drier is mounted on a vibrating base (not shown). The heated air which is fed to zone A via plenum chamber A' is controlled to a maximum temperature of 50-55°C, preferably less than 50°C. The temperature of the air fed to the sequential zones B to F may be substantially the same as that of zone A or the temperature gradually increased, e.g. to about 80°C. In the former case, the product discharged at 132 is transferred to a second drier in which the partially dried hide splits are subjected to fluidisation in an air stream having a higher temperature than the first air stream, e.g. preferably at 60 to 80°C, e.g. 60 to 70°C, although this temperature could be higher, e.g. up to 120°C, provided that the residence time was relatively short. At a temperature of 70 to 80°C, the residence time is preferably 6 to 8 minutes.

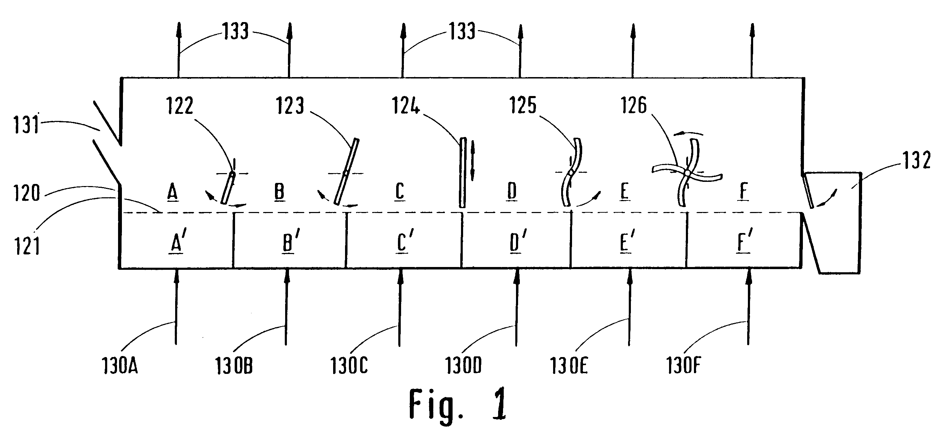

The second drier which operates at a higher temperature, e.g. 70 to 120°C, is preferably a fluidised bed drier having a vibrating base and divided into zones in a similar way to that shown in Figure 1. The output from the first vibrating drier unit can be directed by suitable conveyor (e.g. a belt conveyor or an Archimedes screw conveyor) to the second conveyor. The residence time in the first drier is preferably 10 to 25 minutes, e.g. about 20 minutes. The residence time in the second drier is normally shorter, e.g. 10 to 20 minutes, usually about 15 minutes.

It will be appreciated that the driers can include any number of drying zones and the partitions dividing the individual zones can be any of the designs 122-126 shown in Figure 1.

The pieces of split hide fed to the first drier have a very high water content, which may be as high as 75 to 80%. Efficient agitation is very important in the initial stage since the surface of the pieces can become very sticky and adhere together in clumps or stick to the walls of the drying zone or chamber. Vigorous vibration of the base is effective in reducing this tendency as is also injection of jet streams of air within the fluidised bed as described in the above-mentioned European patent application. Mechanical agitation by a paddle or stirrer or flail may also be useful to reduce the tendency of the material to clump together.

Using an air flow of 500 to 700 cubic metres of fluidising air per hour and an air temperature of 45 to 48°C in the initial stages, it has proved possible to achieve an initial drying rate of 50 to 60 kgs of water per hour with a raw material feed of 80-120 kgs per hour. This rate drops to 7 to 15 kgs (e.g. 10-12 kgs) per hour of water in the subsequent drying stage.

In the second stage, the temperature can be increased because the dried outside skin insulates the wet interior from the contact temperature. There seems to be a temperature gradient through the pieces of semi-dried material and it appears to be only collagen in association with high concentrations of water which is particularly vulnerable to denaturing at temperatures of 50°C and above.

When the material had reached a water content of below 30%, the drying can be continued by increasing the temperature of the fluidising air to 70-75°C and drying until a water content of 15 to 12% is reached, preferably 7 to 10%. Using this sequence of temperatures, the target moisture content can be reached in 25 to 60 minutes from introduction into the fluidised bed drier.

While sequential batch drying using a fluidised bed drier is the preferred method of drying the collagen-rich material, other driers may also be employed. For example, apparatus of the kind described in US Patent No. 3214844 may be employed, in which the pieces of collagen-rich material could be conveyed in baskets, having apertured bases, through a drying zone or zones. The air velocity may be adjusted to fluidise the pieces of collagen-rich material. The conveyor may be operated continuously or in a step-wise manner. US Patent No. 4419834 and UK Patent No. 1075432 also disclose apparatus which may be used to effect the drying process of this invention.

The process of this invention may include two or more driers which are preferably linked together with conveyors to take the output from one drier to the next. Preferably, there are three driers linked together sequentially and the temperature of the drying air streams preferably increases from the initial drier to the third drier. The output from the third drier may be transferred to a fourth drier or similar apparatus in which cooling air is passed through the collagen-rich material to gradually cool it to room temperature.

The temperature of the gas stream in the second drier or zone need not be increased compared with that in the first drier or zone. It may be the same or even lower and the temperature increased in the third drier or zone.

For example, in the first drier the temperature of the gas stream may be 40 to 45°C. In the second drier the temperature may be the same initially or be reduced and the temperature gradually increased to 70 to 80°C, as the moisture level is reduced. As the moisture content approaches the target level, the temperature may be further increased, e.g. up to 90 to 120°C. This may be carried out in the second drier by increasing the temperature of the air stream or in a third drier. In the final drying step, the temperature may be gradually reduced to ambient by fluidising the material in an air stream at ambient temperatures.

It is important to avoid overheating the collagen-containing material at high moisture contents. At higher water contents, e.g. above 25 to 30%, the material should not be heated above 50°C since otherwise the product can suffer substantial discolouration and conversion to gelatin. However, discolouration proceeds slower at lower moisture levels and one can increase the drying time and temperature above 50 to 55°C, once a moisture content of 25 to 30% or less is attained.

The dried pieces of collagen-containing material can be converted into a fibrous product having a low powder content by milling in a hammer mill. A preferred mill is a type having swinging serrated hammers, preferably with a flow of air through the mill to take away powdery residues.

The product aimed for has a fibre length of 2 to 4 mms and an average fibre diameter in the range of 30 to 100 µm (microns) preferably about 50 µm (microns). The fibres should be highly branched with a well developed ancillary mass of fibrils extending from the main fibres. There should be a minimum of discolouration and the fibrous material resembles fine wool and has a white or creamy colour. A final water content of 7-10% and a bulk density of 0.06 grams/cc plus or minus 0.02, e.g. 0.08g/cc, is typical of the final product. The dried product is rich in collagen with a minimum converted to gelatin. The gelatinisation temperature of the products of the present invention is generally higher than that of conventional powdered collagen and is generally at least 80°C, e.g. 80 to 85°C.

Figure 2 is a photomicrograph of dried fibrous collagen produced in accordance with the present invention. This micrograph was taken at a magnification of x 100. As can be seen, the fibres are highly branched and crimped and have many fibrils extending from the main group of fibres.

## Claims

1. A method of producing dried fibrous collagen which comprises subjecting pieces of material containing collagen, the pH of which being in the region of neutrality, to drying under variable drying conditions, wherein, initially, said material is subjected to drying in a first stream of heated gas maintained at a temperature of less than 60^{o}C and subsequently further drying the resulting partially dried material in a second heated gas stream at a temperature which is higher than said first stream, and cooling the material, after exposure to said second heated gas, the temperatures and treatment times during said drying being controlled to minimise discolouration and hydrolysis of the dried material and milling the dried collagen to form fibrous collagen.

2. A method according to claim 1 in which the temperature of the first gas stream is less than 55°C.

3. A method according to claim 1 or 2 in which the temperature of the second gas stream does not exceed 90°C.

4. A method according to any one of the preceding claims in which the said material containing collagen is fluidised in said first gas stream and subsequently fluidised in said second gas stream.

5. A method according to any one of the preceding claims in which said first gas stream is heated to a temperature of from 40°C to 55°C.

6. A method according to claim 1 in which said material containing collagen is subjected to one or more further drying treatments prior to cooling to ambient temperature.

7. A method according to any one of the preceding claims in which the drying in the first gas stream is continued until the water content of said material containing collagen has been reduced to about one half of its original content.

8. A method according to claim 1 in which the drying in the first gas stream is continued until the water content of said material containing collagen has been reduced to 25 to 40% by weight.

9. A method according to claim 8 in which the drying in the first gas stream is continued until the water content is reduced to 30 to 40% by weight.

10. Dried fibrous collagen having a water content of 7 to 12% by weight and a branched, fibrillar structure, an average fibre length of from 2 to 5 mms and an average fibre diameter of from 30 to 100 µm (microns).

11. Dried fibrous collagen according to claim 10 which has a gelatinisation temperature of at least 80°C.

12. A method according to claim 1 in which said material containing collagen comprises animal tendons or split hides.

## Patentansprüche

1. Verfahren zum Herstellen getrockneten fasrigen Kollagens, umfassend das Unterwerfen von Teilen von Material, das Kollagen enthält, und dessen p_{H}-Wert im Bereich der Neutralität liegt, Trocknen bei variablen Trocknungsbedingungen, wobei anfangs das genannte Material dem Trocknen in einem ersten Strom erhitzten Gases unterworfen wird, der bei einer Temperatur von weniger als 60° Celsius gehalten wird, und anschließend weiteres Trocknen des resultierenden, teilweise getrockneten Materials in einem zweiten, erhitzten Gasstrom bei einer Temperatur, die höher ist, als die des ersten Stromes, und Abkühlen des Materiales nach dem Aussetzen gegenüber dem zweiten erhitzten Gas, wobei die Temperaturen und die Behandlungshäufigkeiten während des Trocknens dahingehend kontrolliert werden, daß ein Verfärben und eine Hydrolyse des getrockneten Materiales minimiert wird, und Mahlen des getrockneten Kollagens zwecks Bildens faserförmigen Kollagens.

2. Verfahren nach Anspruch 1, wobei die Temperatur des ersten Gasstromes unter 55° Celsius liegt.

3. Verfahren nach Anspruch 1 oder 2, wobei die Temperatur des zweiten Gasstromes 90° Celsius nicht übersteigt.

4. Verfahren nach einem der vorausgegangenen Ansprüche, wobei das Kollagen-enthaltende Material im ersten Gasstrom fluidisiert und anschließend im zweiten Gasstrom fluidisiert wird.

5. Verfahren nach einem der vorausgegangenen Ansprüche, wobei der erste Gasstrom auf eine Temperatur von zwischen 40° und 45° Celsius aufgeheizt wird.

6. Verfahren nach Anspruch 1, wobei das Kollagen-enthaltende Material einer oder mehreren Trocknungsbehandlungen vor dem Abkühlen auf Umgebungstemperatur unterworfen wird.

7. Verfahren nach einem der vorausgegangenen Ansprüche, wobei das Trocknen im ersten Gasstrom solange fortgeführt wird, bis der Wassergehalt des Kollagen-enthaltenden Materiales auf etwa die Hälfte seines ursprünglichen Wassergehaltes verringert wird.

8. Verfahren nach Anspruch 1, wobei das Trocknen im ersten Gasstrom solange fortgeführt wird, bis der Wassergehalt des Kollagen-enthaltenden Materiales auf etwa 25 bis 40 Gewichtsprozent reduziert ist.

9. Verfahren nach Anspruch 8, wobei das Trocknen im ersten Gasstrom solange durchgeführt wird, bis der Wassergehalt auf etwa 30 bis 40 Gewichtsprozent reduziert ist.

10. Getrocknetes faserförmiges Kollagen mit einem Wassergehalt von 7 bis 12 Gewichtsprozent und einer verzweigten fibrillierten Struktur mit einer durchschnittlichen Faserlänge von 2 bis 5 mm und einem durchschnittlichen Faserdurchmesser von 30 bis 100 Mikron.

11. Getrocknetes fasriges Kollagen nach Anspruch 10, das eine Gelatinisierungstemperatur von wenigstens 80° Celsius hat.

12. Verfahren nach Anspruch 1, wobei das Kollagen-enthaltende Material tierische Flexen oder gespaltene Häute enthält.

## Revendications

1. Procédé de production de collagène sec fibreux, comprenant la soumission de morceaux de matériau contenant du collagène, dont le pH est compris dans la zone de neutralité, à un séchage dans des conditions de séchage variables, dans lequel, initialement, ledit matériau est soumis à un séchage dans a premier courant de gaz chauffé maintenu à une température inférieure à 60°C et ensuite à un séchage supplémentaire du matériau partiellement séché résultant dans une deuxième courant de gaz chauffé à une température qui est supérieure à celle dudit premier courant, et le refroidissement du matériau, après exposition audit deuxième gaz chauffé, les températures et les durées de traitement durant ledit séchage étant contrôlées pour minimiser la décoloration et l'hydrolyse du matériau séché, et le broyage du collagène séché pour former du collagène fibreux.

2. Procédé selon la revendication 1, dans lequel la température du premier courant de gaz est inférieure à 55°C.

3. Procédé selon la revendication 1 ou 2, dans lequel la température du deuxième courant de gaz ne dépasse pas 90°C.

4. Procédé selon l'une quelconque des revendications précédentes, dans lequel ledit matériau contenant du collagène est fluidifisé dans ledit premier courant de gaz et ensuite fluidsié dans ledit deuxième courant de gaz.

5. Procédé selon l'une quelconque des revendications précédentes, dans lequel ledit premier courant de gaz est chauffé à une température allant de 40°C à 55°C.

6. Procédé selon la revendication 1, dans lequel ledit matériau contenant du collagène est soumis à un ou plusieurs autres traitements de séchage avant le refroidissement à la température ambiante.

7. Procédé selon l'une quelconque des revendications précédents, dans lequel le séchage dans le premier courant de gaz est poursuivi jusqu'à ce que il teneur en eau dudit matériau contenant du collagène ait été réduite à environ la moitié de sa teneur d'origine.

8. Procédé selon la revendication 1, dans lequel le séchage dans le premier courant de gaz est poursuivi jusqu'à ce que la teneur en eau dudit matériau contenant du collagène ait été réduite à 25 à 40 % en poids.

9. Procédé selon la revendication 8, dans lequel le séchage dans le premier courant de gaz est poursuivi jusqu'à ce que la teneur en eau soit réduite à 30 à 40% en poids.

10. Collagène sec fibreux ayant une teneur a eau de 7 à 12 % en poids et une structure fibrillaire, ramifiée, une longueur de fibre moyenne allant de 2 à 5 mm et un diamètre de fibre moyen allant de 30 à 100 µm (microns).

11. Collagène sec fibreux selon la revendication 10, ayant une température de gélatiuisation d'au moins 80°C.

12. Procédé selon la revendication 1, dans lequel ledit matériau contenant du collagène comprend des tendons ou des cuirs déchirés animaux.
